# EUROPEAN PATENT SPECIFICATION

(11) **EP 3 214 566 B1**
(45) Date of publication and mention of the grant of the patent: **12.09.2018**
(21) Application number: 16464003.9
(22) Date of filing: 01.03.2016
(51) Int. Cl.: G06F 21/55, G06F 21/75, G09C 1/00, H04L 9/00

(54) **PREVENTING SIDE CHANNEL ATTACKS ON A CPU**
VERHINDERUNG VON SEITENKANALANGRIFFEN AUF EINER CPU
PRÉVENTION D'ATTAQUES PAR CANAUX CACHÉS SUR UNE UC

(43) Date of publication of application: 06.09.2017
(73) Proprietor: Siemens Aktiengesellschaft, 80333 München (DE)
(72) Inventor: Pitu, Ciprian-Leonard, 500371 Brasov (RO)
(74) Representative: Maier, Daniel Oliver

(56) References cited:
- US-A1- 2007 288 738
- US-A1- 2009 327 664
- US-A1- 2013 073 873

## Description

### FIELD OF THE INVENTION

The present invention relates to a method implemented in a computer system for preventing side channel attacks on a CPU, especially on the CPU core.

A CPU (central processing unit) is the electronic circuitry within a computer that carries out the instructions of a computer program by performing the basic arithmetic, logical, control and input/output (I/O) operations specified by the instructions. The term "CPU" refers to a processor, more specifically to its processing unit and control unit (CU), distinguishing these core elements of a computer from external components.such as main memory and I/O circuitry. Principal components of a CPU include the arithmetic logic unit (ALU) that performs arithmetic and logic operations, processor registers that supply operands to the ALU and store the results of ALU operations, and a control unit that fetches instructions from memory and executes them by directing the coordinated operations of the ALU, registers and other components.

Most CPUs are microprocessors, meaning they are contained on a single integrated circuit (IC) chip. An IC that contains a CPU may also contain memory, peripheral interfaces, and other components of a computer; such integrated devices are variously called microcontrollers or systems on a chip (SoC).

A system on chip (SoC) is an integrated circuit (IC) that integrates all components of a computer or other electronic system into a single chip. It may contain digital, analog, mixed-signal, and often radio-frequency functions, all on a single chip substrate. A typical application of SoCs is in the area of embedded systems. An embedded system is a computer system with a dedicated function within a larger mechanical or electrical system, often with real-time computing constraints.

SoCs can be implemented as an application-specific integrated circuit (ASIC) or using a field-programmable gate array (FPGA). A field-programmable gate array (FPGA) is an integrated circuit designed to be configured by a customer or a designer after manufacturing. The FPGA configuration is generally specified using a hardware description language (HDL), similar to that used for an application-specific integrated circuit (ASIC).

Especially in cryptography, power analysis is a form of side channel attack (SCA) in which the attacker studies the power consumption of a cryptographic hardware device. (such as an integrated circuit, especially the CPU core). The attack can non-invasively extract cryptographic keys and other secret information from the device. Simple power analysis (SPA) involves visually interpreting power traces, or graphs of electrical activity over time. Differential power analysis (DPA) is a more advanced form of power analysis which can allow an attacker to compute the intermediate values within cryptographic computations by statistically analyzing data collected from multiple cryptographic operations. The attack exploits varying power consumption of microprocessors or other hardware while performing operations using secret keys. DPA attacks have signal processing and error correction properties which can extract secrets from measurements which contain too much noise to be analyzed using simple power analysis.

### STATE OF THE ART

There are already solutions to prevent side channel attacks which solutions try to de-correlate the power consumed by the CPU and the information processed by the CPU.

Cryptography Research Inc. applies methods to custom cryptographic cores which are hardened against side channel attacks but these methods are not applied to CPU cores. CPU cores execute only a small number of instructions each of which can be uniquely characterized by the shape of the power trace. Thus the minute variations in the shape of the power trace for a given instruction are related to the processed data, therefore making SCA possible.

US 6654884 B2 refers to hardware-level mitigation and DPA countermeasure for cryptographic devices and proposes a dedicated approach to HDL coding such that the number of transistor toggles are independent of the processed data. This method, however, requires a more complex approach to HDL coding. The hardware description
language (HDL) is a specialized computer language used to program the structure, design and operation of electronic circuits, like digital logic circuits.

US 6327661 B1 refers to using unpredictable information to minimize leakage from smartcards and other cryptosystems and discloses an unpredictable noise generator which de-correlates the power consumption of the CPU from the processed data, thus preventing DPA. Since this method generates analog noise it is not universally applicable to all types of CPU cores.

US 2007/288738 teaches preventing information leakage through side channel attacks during the boot phase of a multiprocessor system by randomly designating one processor as the real boot processor, and using the other processors as dummy processors that execute randomly-chosen instructions, thereby creating noise that masks the power signature of the real boot operations.

US 2009/327664 teaches preventing information leakage through side channel attacks on a first CPU (or processing core) by using redundant circuitry to execute randomly-chosen instructions on randomly-chosen operands to generate noise while the real execution is taking place.

US 2013/073873 teaches preventing information leakage through side channel attacks by executing, in parallel and potentially using a dedicated processing unit, randomly-chosen instructions on randomly-chosen operands in order to generate noise that will mask the power signature of the real operations.

### SUMMARY OF THE INVENTION

One object of the present invention is to provide a method for preventing side channel attacks on a CPU, especially on the CPU core, which method is applicable to different CPU cores.

According to the present invention this method for preventing side channel attacks on a first CPU includes the following steps:
- selecting at random an instruction from the instruction pool of this first CPU,
- generating random data to be used as operands for the selected instruction,
- executing the random instruction using the random data as operands in a second CPU during operation of the first CPU,
- discarding the data generated by the second CPU.

So by providing a second CPU, which in this case is also called the hidden CPU, and by providing random instructions and random data for this hidden CPU additional electrical current (or power, respectively) is consumed by this hidden CPU which masks the current consumption (or power consumption, respectively) by the first CPU which first CPU does the processing of the real data. The data generated by the hidden CPU is not saved to a memory, it is simply discarded.

One embodiment of the invention is that selecting at random an instruction from the instruction pool of the first CPU is done by a random number generator which generator is implemented in hardware. So the random number generator is not accessible by software and thus no attacks on the random number generator are possible.

Another embodiment of the invention is that generating random data is done by a random number generator which generator is implemented in hardware. Again, since the random number generator is not accessible by software, no attacks on the random number generator are possible.

Of course the same random number generator can be used for selecting at random an instruction from the instruction pool and for generating random data.

The second CPU and the random number generator being hardware parts, the method according to the invention is fully controlled by hardware. There is no intervention by software. Also the hidden CPU is not accessible by software.

According to another embodiment of the invention the second CPU runs on another clock (i.e. another physical clock) which is different from the clock of the first CPU but which is synchronousto the clock of the first CPU, the jitter of the clockof the second CPU being higher than that of the clock of the first CPU.

To better mask the instructions processed by the first CPU, the clock of the second CPU is synchronous to the clock of the first CPU. However, to de-correlate the peaks of the consumed current of the two CPU cores, the clock of the hidden CPU should have a higher jitter than the main system clock. Jitter is the deviation from true periodicity of a presumed periodic signal in electronics.

As already mentioned above, the invention can favorably be used to protect .cryptographic processes. Accordingly, the first CPU can process cryptographic information.

First and second CPU can be part of a system on chip. However, the method according to the invention can be applied to any type of executed instructions by any processing unit, not just to cryptographic operations and/or a system on chip.

The present invention further comprises an apparatus for preventing side channel attacks on a first CPU, including at least
- a first CPU,
- a random number generator which generator is implemented in hardware and which is configured to select at random an instruction from the instruction pool of the first CPU and to generate random data to be used as operands for the selected instruction,
- a second CPU configured to execute the random instruction using the random data as operands and to discard the data generated. Such apparatus is able to carry out the method according to the invention.

The second CPU of the apparatus can be configured to run on another clock which is different from the clock of the first CPU but which is synchronous to the clock of the first CPU, the jitter of the clock of the second CPU being higher than that of the clock of the first CPU.

The apparatus according to the invention can be implemented as a system on chip.

The solution according to the invention is meant to "hide" the information processed by the CPU from attackers executing SCA. It prevents an attacker from executing a SCA by adding a "false" and random power trace (from the hidden CPU) to the original power trace (from the main CPU). The hidden CPU together with the random data is contributing to the overall consumed power thus "masking" or de-correlating the real CPU's power drain.

No special components are needed, just a random number generator and a simple extra CPU with an arithmetic logic unit (ALU) and a minimum of glue logic. The hidden CPU does not need to have an entire register set or memories. There is no need to use analog technology or technology dependent macros. Although the present invention minimally raises the power consumption it prevents side channel information leakage.

The proposed solution uses random data thus making it impossible to identify patterns which would apply to more than one device.

The proposed solution uses standard digital components and is applicable to any type of CPU or full-custom digital logic.

### BRIEF DESCRIPTION OF FIGURES

The invention will be explained in closer detail by reference to a preferred embodiment, which is depicted schematically in the figures.
- Fig. 1: shows a possible structure for an apparatus according to the invention,
- Fig. 2: shows a flow diagram of the method according to the invention.

### WAYS TO IMPLEMENT THE INVENTION

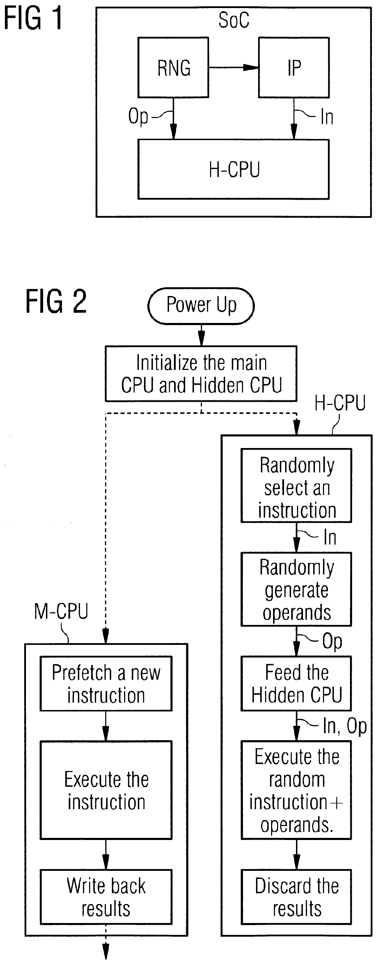

Fig. 1 shows a possible additional structure for a system on chip device SoC according to the invention. The additional structure of the system on chip SoC includes at least a random number generator RNG and a second CPU, also named hidden CPU, H-CPU. The first or main CPU M-CPU, is not shown in Fig. 1, only the instruction pool IP where instructions for the main CPU M-CPU are stored. The instruction pool IP can be a subset of the main CPU's instruction set. The random number generator RNG has two duties: it has to select randomly an instruction In from the instruction pool IP which instruction In is then sent to the hidden CPU H-CPU. Secondly, the random number generator RNG generates random data which is used as operand(s) Op for the instruction In and which is also sent to the hidden CPU H-CPU.

In Fig. 2 the processes with relation to the first or main CPU are shown on the left and the processes with relation to the second or hidden CPU H-CPU are shown on the right.

During normal operation of the SoC, when the power is switched on, see "Power Up", the initialization process is carried out by initializing the main CPU M-CPU and the hidden CPU H-CPU. For the hidden CPU H-CPU the random number generator RNG (see Fig. 1) randomly selects an instruction and randomly generates operands. During this period of time the main-CPU M-CPU is idle. In the next step the main CPU M-CPU fetches a new instruction from a memory which memory is situated on-chip or off-chip, see "Prefetching a new instruction". Duringthis step of the main CPU M-CPU the random instructions and the random operands are fed to the hidden CPU H-CPU.

Hidden CPU H-CPU and main CPU M-CPU run on different physical clocks which are, however, synchronous. The hidden CPU clock has a higher jitter than the main system clock in order to de-correlate the peaks of the consumed power of the two clocks. So in a next step, that could be in the next clock cycle (or for other implementations it could be a few clock cycles later), the main CPU M-CPU executes its instruction fetched before whereas the hidden CPU H-CPU executes the random instruction with the random operands. Due to the high clock jitter and the random data there will be no possibility to distinguish between the main CPU M-CPU and the hidden CPU H-CPU in terms of consumed power. Thus no correlation between the recorded power trace and the processed data will be possible.

The results of the data processed by the hidden CPU H-CPU are discarded, they are not written to any memory nor used in further processing steps. The results produced by the main CPU M-CPU are written back to a memory.

### LIST OF REFERENCE SIGNS

- H-CPU: second CPU, hidden CPU
- In: instruction
- IP: instruction pool
- M-CPU: first CPU, main CPU
- Op: Operand
- RNG: Random number generator
- SoC: System on chip device

## Claims

1. Method implemented in a computer system for preventing side channel attacks on a first CPU (M-CPU), the method including the following steps:
- selecting at random an instruction (In) from the instruction pool (IP) of this first CPU (M-CPU),
- generating random data to be used as operands (Op) for the selected instruction (In),
- executing the random instruction (In) using the random data as operands (Op) in a second CPU (H-CPU) during operation of the first CPU (M-CPU),
- discarding the data generated by the second CPU (H-CPU), wherein the second CPU (H-CPU) runs on another clock which is different from the clock of the first CPU (M-CPU) but which is synchronous to the clock of the first CPU (M-CPU), the jitter of the clock of the second CPU (H-CPU) being higher than that of the clock of the first CPU (M-CPU).

2. Method according to claim 1, **characterized in that** selecting at random an instruction (In) from the instruction pool (IP) of the first CPU (M-CPU) is done by a random number generator (RNG) which generator is implemented in hardware.

3. Method according to claim 1 or 2, **characterized in that** generating random data is done by a random number generator (RNG) which generator is implemented in hardware.

4. Method according to claims 2 and 3, **characterized in that** the same random number generator (RNG) is used for selecting at random an instruction (In) from the instruction pool and for generating random data.

5. Method according to any of the preceding claims, **characterized in that** the first CPU (M-CPU) is processing cryptographic information.

6. Method according to any of the preceding claims, **characterized in that** first and second CPU (M-CPU, H-CPU) are part of a system on chip (SoC).

7. Apparatus for preventing side channel attacks on a first CPU (M-CPU), including at least
- a first CPU (M-CPU),
- a random number generator (RNG) which generator is implemented in hardware and which is configured to select at random an instruction (In) from the instruction pool (IP) of the first CPU (M-CPU) and to generate random data to be used as operands (Op) for the selected instruction (In),
- a second CPU (H-CPU) configured to execute the random instruction (In) using the random data as operands (Op) and to discard the data generated and configured to run on another clock which is different from the clock of the first CPU (M-CPU) but which is synchronous to the clock of the first CPU (M-CPU), the jitter of the clock of the second CPU (H-CPU) being higher than that of the clock of the first CPU (M-CPU).

8. Apparatus according to claim 7, **characterized in that** the apparatus is implemented as a system on chip (SoC).

## Patentansprüche

1. Verfahren, welches in einem Computersystem zur Verhinderung von Seitenkanalangriffen auf einer ersten CPU (M-CPU) implementiert ist, wobei das Verfahren die folgenden Schritte umfasst:
- zufälliges Auswählen einer Anweisung (In) aus dem Anweisungspool (IP) dieser ersten CPU (M-CPU),
- Erzeugen zufälliger Daten, die als Operanden (Op) für die ausgewählte Anweisung (In) verwendet werden sollen,
- Ausführen der zufälligen Anweisung (In) unter Verwendung der zufälligen Daten als Operanden (Op) in einer zweiten CPU (H-CPU) während des Betriebs der ersten CPU (M-CPU),
- Verwerfen der von der zweiten CPU (H-CPU) erzeugten Daten, wobei die zweite CPU (H-CPU) mit einem anderen Takt arbeitet, welcher von dem Takt der ersten CPU (M-CPU) verschieden ist, welcher jedoch mit dem Takt der ersten CPU (M-CPU) synchron ist, wobei der Jitter des Taktes der zweiten CPU (H-CPU) höher ist als derjenige des Taktes der ersten CPU (M-CPU).

2. Verfahren nach Anspruch 1, **dadurch gekennzeichnet, dass** das zufällige Auswählen einer Anweisung (In) aus dem Anweisungspool (IP) der ersten CPU (M-CPU) mittels eines Zufallszahlengenerators (RNG) erfolgt, wobei dieser Generator in Hardware implementiert ist.

3. Verfahren nach Anspruch 1 oder 2, **dadurch gekennzeichnet, dass** das Erzeugen zufälliger Daten mittels eines Zufallszahlengenerators (RNG) erfolgt, wobei dieser Generator in Hardware implementiert ist.

4. Verfahren nach den Ansprüchen 2 und 3, **dadurch gekennzeichnet, dass** derselbe Zufallszahlengenerator (RNG) zum zufälligen Auswählen einer Anweisung (In) aus dem Anweisungspool und zum Erzeugen zufälliger Daten verwendet wird.

5. Verfahren nach einem der vorhergehenden Ansprüche, **dadurch gekennzeichnet, dass** die erste CPU (M-CPU) kryptographische Informationen verarbeitet.

6. Verfahren nach einem der vorhergehenden Ansprüche, **dadurch gekennzeichnet, dass** die erste und die zweite CPU (M-CPU, H-CPU) Teil eines Einchipsystems (System on Chip, SoC) sind.

7. Vorrichtung zur Verhinderung von Seitenkanalangriffen auf einer ersten CPU (M-CPU), welche wenigstens aufweist:
- eine erste CPU (M-CPU),
- einen Zufallszahlengenerator (RNG), wobei dieser Generator in Hardware implementiert ist und dafür ausgelegt ist, eine Anweisung (In) aus dem Anweisungspool (IP) der ersten CPU (M-CPU) zufällig auszuwählen und zufällige Daten zu erzeugen, die als Operanden (Op) für die ausgewählte Anweisung (In) verwendet werden sollen,
- eine zweite CPU (H-CPU), die dafür ausgelegt ist, die zufällige Anweisung (In) unter Verwendung der zufälligen Daten als Operanden (Op) auszuführen und die erzeugten Daten zu verwerfen, und dafür ausgelegt ist, mit einem anderen Takt zu arbeiten, welcher von dem Takt der ersten CPU (M-CPU) verschieden ist, welcher jedoch mit dem Takt der ersten CPU (M-CPU) synchron ist, wobei der Jitter des Taktes der zweiten CPU (H-CPU) höher ist als derjenige des Taktes der ersten CPU (M-CPU) ist.

8. Vorrichtung nach Anspruch 7, **dadurch gekennzeichnet, dass** die Vorrichtung als ein Einchipsystem (System on Chip, SoC) implementiert ist.

## Revendications

1. Procédé mis en oeuvre dans un système informatique pour empêcher des attaques par canaux latéraux sur une première CPU (M-CPU), le procédé incluant les étapes qui suivent :
- la sélection de façon aléatoire d'une instruction (In) à partir d'un ensemble d'instructions (IP) de cette première CPU (M-CPU) ;
- la génération de données aléatoires destinées à être utilisées en tant qu'opérandes (Op) pour l'instruction sélectionnée (In) ;
- l'exécution de l'instruction aléatoire (In) en utilisant les données aléatoires en tant qu'opérandes (Op) dans une seconde CPU (H-CPU) pendant le fonctionnement de la première CPU (M-CPU) ;
- la mise à l'écart des données générées par la seconde CPU (H-CPU), dans lequel la seconde CPU (H-CPU) fonctionne sur une autre horloge qui est différente de l'horloge de la première CPU (M-CPU) mais qui est synchrone par rapport à l'horloge de la première CPU (M-CPU), l'instabilité oscillatoire de l'horloge de la seconde CPU (H-CPU) étant plus élevée que celle de l'horloge de la première CPU (M-CPU).

2. Procédé selon la revendication 1, **caractérisé en ce que** la sélection de façon aléatoire d'une instruction (In) à partir de l'ensemble d'instructions (IP) de la première CPU (M-CPU) est effectuée par un générateur de nombres aléatoires (RNG), lequel générateur est mis en oeuvre selon un composant matériel.

3. Procédé selon la revendication 1 ou 2, **caractérisé en ce que** la génération de données aléatoires est effectuée par un générateur de nombres aléatoires (RNG), lequel générateur est mis en oeuvre selon un composant matériel.

4. Procédé selon les revendications 2 et 3, **caractérisé en ce que** le même générateur de nombres aléatoires (RNG) est utilisé pour sélectionner de façon aléatoire une instruction (In) à partir de l'ensemble d'instructions et pour générer des données aléatoires.

5. Procédé selon l'une quelconque des revendications précédentes, **caractérisé en ce que** la première CPU (M-CPU) traite une information cryptographique.

6. Procédé selon l'une quelconque des revendications précédentes, **caractérisé en ce que** les première et seconde CPU (M-CPU, H-CPU) sont une partie d'un système sur puce (SoC).

7. Appareil pour empêcher des attaques par canaux latéraux sur une première CPU (M-CPU), incluant au moins :
- une première CPU (M-CPU) ;
- un générateur de nombres aléatoires (RNG), lequel générateur est mis en oeuvre selon un composant matériel et est configuré de manière à ce qu'il sélectionne de façon aléatoire une instruction (In) à partir de l'ensemble d'instructions (IP) de la première CPU (M-CPU) et de manière à ce qu'il génère des données aléatoires destinées à être utilisées en tant qu'opérandes (Op) pour l'instruction sélectionnée (In) ;
- une seconde CPU (H-CPU) qui est configurée de manière à ce qu'elle exécute l'instruction aléatoire (In) en utilisant les données aléatoires en tant qu'opérandes (Op) et de manière à ce qu'elle mette à l'écart les données qui sont générées et qui est configurée de manière à ce qu'elle fonctionne sur une autre horloge qui est différente de l'horloge de la première CPU (M-CPU) mais qui est synchrone par rapport à l'horloge de la première CPU (M-CPU), l'instabilité oscillatoire de l'horloge de la seconde CPU (H-CPU) étant plus élevée que celle de l'horloge de la première CPU (M-CPU).

8. Appareil selon la revendication 7, **caractérisé en ce que** l'appareil est mis en oeuvre en tant que système sur puce (SoC).
